# EUROPEAN PATENT APPLICATION

(11) **EP 4 607 040 A1**
(43) Date of publication of application: **27.08.2025**
(21) Application number: 25158953.7
(22) Date of filing: 19.02.2025
(51) Int. Cl.: F16B 5/01, F16B 9/00, F16B 5/02, F16B 33/00

(54) **METHOD FOR MOUNTING AN OBJECT TO COMPRESSIBLE WALLBOARD**

(30) Priority: 22.02.2024 GB 202402528
(71) Applicant: DLP Limited, Douglas IM99 1RZ (IM)
(72) Inventor: Fenna, Iain Stuart, IM6 1EE Kirk Michael (IM); Self, James, IM9 4AX Colby (IM)
(74) Representative: Doherty, William

(57) **Abstract**

A kit of parts (10) for use in a method for mounting an object to a compressible wallboard (12) such as PVC wallboard is provided. The kit (10) comprises a plurality of spacer inserts (14) having a thickness equal or substantially equal to a thickness of the compressible wallboard (12).

## Description

The present invention relates to a method for mounting an object to compressible wallboard, in particular waterproof wallboard suitable for use in a wet environment such as a bathroom or shower room. The invention further relates to a kit of parts suitable for implementing such a method.

Polyvinylchloride (PVC) wallboards are widely used in wetroom settings, such as bathrooms, as waterproof cladding. The wallboards will typically interengage using a tongue-and-groove connector to prevent ingress of water through to the underlying substrate, such as a medium density fibreboard, plasterboard or chipboard. The PVC wallboards are adhesively connected to the substrate, and thus a complete waterproof wall can be assembled in a small amount of time and requiring little training of the installer.

The PVC wallboard is formed as two layers of PVC spaced apart from one another by reinforcement members, thus forming a hollow and therefore compressible structure. One layer is the substrate-contact surface, to which the adhesive is applied during installation, and the other layer is decorative, being the in-use displayed surface.

The compressive strength of the PVC wallboard is very much less than solid wood cored wallboard or high-pressure laminate-faced boards which can be used in the same way, but are much more expensive. Laminate-faced boards are, however, very susceptible to damage following water ingress.

Further problems arise in installing objects on the wallboards, since penetrating the wallboard will not only create potential leak pathways through to the substrate for water, but also impacts the structure of the wallboard when the layers and particularly the reinforcement members are penetrated.

The present invention seeks to provide a method for overcoming the difficulties associated with installation of objects onto compressible wallboard such as PVC wallboard.

According to a first aspect of the invention, there is provided a method for mounting an object to compressible wallboard, the method comprising the steps of: a] providing at least one spacer insert having a thickness equal or substantially equal to a thickness of the compressible wallboard; b] making a number of holes in the compressible wallboard equal to a number of fasteners required to mount the object to the compressible wallboard, the or each hole being dimensioned to receive a said spacer insert therein; c] inserting a said spacer insert into the or each hole such that a front surface of the or each spacer insert is flush or substantially flush to a front surface of the compressible wallboard; and d] mounting the object to the compressible wallboard by engaging the or each fastener at the or each spacer insert.

Compressible wallboard is vulnerable to bending or deformation when drilled into, and the void channels therein also leaves the risk of water ingress. Since PVC wallboard is commonly used in bathroom installations, this is a significant risk. The installation of spacers inserts simultaneously provides reinforcement against buckling of the wallboard, whilst also advantageously inhibiting water ingress inside or through the wallboard to the underlying wall substrate. The present method therefore allows for suitable mounting of objects to compressible wallboard, particularly grab rails, shower seats, and the like.

Preferably, the compressible wallboard may be formed from a plastics material and more preferably formed from unplasticized polyvinylchloride.

Waterproof plastics materials, particularly PVC, are well-suited to use with a method of this type, given their greater use in wet environments.

Optionally, during step d] the or each fastener may be engaged with a substrate to which the compressible wallboard is mounted.

Rather than engaging directly with the wallboard, it is preferred to anchor fixing to the underlying brick, wood, plaster, or any substrate underneath which is capable of greater load bearing. Many substrates can be screwed into directly.

During step b], a said number of holes may be made in a substrate to which the compressible wallboard is mounted, and a corresponding number of wall plugs may be inserted into the holes in the substrate, and during step d] the or each fastener may be engaged with the or each wall plug.

To support the load through the compressible wallboard, it is desirable that the fasteners connect into the substrate. Drilling into the substrate, typically using an alternative drill bit, allows for fixings to be used. Suitable wall plugs can thus be provided for use with the method for various different viable substrates.

Optionally, the spacer inserts may be adhesively secured to a substrate to which the compressible wallboard is mounted.

Adhesive connection improves retention of the spacer inserts in the wallboard during installation and my have additional waterproofing benefits once cured.

Preferably, during step d], the or each fastener may extend through a bore in the or each spacer insert.

It is preferred that there is no direct coupling of the fastener to the spacer insert so that load is not transferred through the spacer insert onto the wallboard, but is instead applied to the substrate.

Optionally, during step b], the number of holes may be made by drilling, preferably using a brad point drill.

Using a drill to cut into the wallboard produces clean circular holes which can be readily matched to the shape of the spacer inserts, and a brad point drill prevent wander of the drill bit. This is particularly problematic for flexible PVC, where drill drift can occur easily.

During step a], a diameter of the spacer inserts may be selected to be greater than a distance between adjacent reinforcement members of the compressible wallboard.

Careful selection of the size of the spacer inserts can assist with the installation process. Loss of spacer inserts can occur if the spacer inserts are small enough to fall into the void channels within the compressible wallboard.

According to a second aspect of the invention, there is provided a kit of parts preferably for use in a method in accordance with the first aspect of the invention, the kit comprising a plurality of spacer inserts having a thickness equal or substantially equal to a thickness of the compressible wallboard.

The provision of a kit which is capable of allowing installation of objects onto compressible wallboard greatly increases the range of situations in which such wallboard can be used. Bathroom furniture including shower seats and grab rails, for instance, can be more readily installed.

Optionally, each of the plurality of spacer inserts may have a thickness in the range of 6mm to 12mm.

Typical thickness of PVC wallboard or cladding ranges from 6mm to 12mm, and it is intended that the present invention be suitable for all wallboard thicknesses.

Preferably, each of the plurality of spacer inserts may have a fastener receiving bore therethrough.

The presence of a bore allows for fasteners to pass through the spacer without a load being applied thereto which might damage the structural integrity of the wallboard.

The kit of parts may further comprise a plurality of fasteners dimensioned to be received through the fastener receiving bore.

Suitable fasteners for installation with spacers can be provided as part of the kit to assist with installation.

Optionally, each of the plurality of spacer inserts may be formed from nylon.

Nylon is a strong and wear-resistant plastics material which will not cause damage to PVC wallboard during installation.

Each of the plurality of spacer inserts may have a circular cross-section.

A circular cross-section for the spacer inserts allows them to be installed following cutting into the wallboard with a standard drill bit.

The kit of parts may further comprise a drill bit, preferably a brad point drill bit.

Providing the drill bit along with the kit of parts ensures that the user cannot accidentally drill the wrong hole size by using an incorrect drill bit. The brad point drill bit improves accuracy of drilling on a PVC wallboard where the risk of drill wander is high due to the material flexibility and the presence of the internal rib structure.

Optionally, a diameter of each of the plurality of spacer inserts may be equal to a diameter of the drill bit.

To provide high-quality waterproofing it is desirable that the spacer inserts completely fill the drilled hole void, minimising the risk of leak paths being formed.

A diameter of each of the plurality of spacer inserts may be greater than a distance between adjacent reinforcement members of the compressible wallboard.

The dimensions of the spacer inserts can be selected to prevent loss of the spacer inserts into void channels within the compressible wallboard, which is otherwise a risk associated with installations of this type.

The kit of parts may further comprise a plurality of wall plugs.

It may be advantageous to provide the correct type of wall plugs along with the kit, which will correctly fit fasteners which can engage with then provided spacer inserts.

The kit of parts may further comprise an adhesive.

An adhesive, ideally with an applicator, will allow the spacer inserts to be fixed in place during installation, and may also improve the waterproofing characteristics thereof.

The invention will now be more particularly described, by way of example only, with reference to the accompanying drawings, in which:
Figure 1 shows a pictorial representation of one embodiment of a mounting kit for use in a method for mounting an object to compressible wallboard, in accordance with the first aspect of the invention;
Figure 2 shows an object to be mounted to compressible wallboard as part of a first step of a method for mounting an object to compressible wallboard, in accordance with the first aspect of the invention;
Figure 3 shows a marked compressible wallboard as part of a second step of a method for mounting an object to compressible wallboard, in accordance with the first aspect of the invention;
Figure 4 shows a drilled compressible wallboard as part of a third step of a method for mounting an object to compressible wallboard, in accordance with the first aspect of the invention;
Figure 5 shows the insertion of wall plugs into a structural wall behind the compressible wallboard as part of a fourth step of a method for mounting an object to compressible wallboard, in accordance with the first aspect of the invention;
Figure 6 shows the insertion of spacer inserts into the compressible wallboard as part of a fifth step of a method for mounting an object to compressible wallboard, in accordance with the first aspect of the invention; and
Figure 7 shows attachment of the object to the compressible wallboard as part of a sixth step of a method for mounting an object to compressible wallboard, in accordance with the first aspect of the invention.

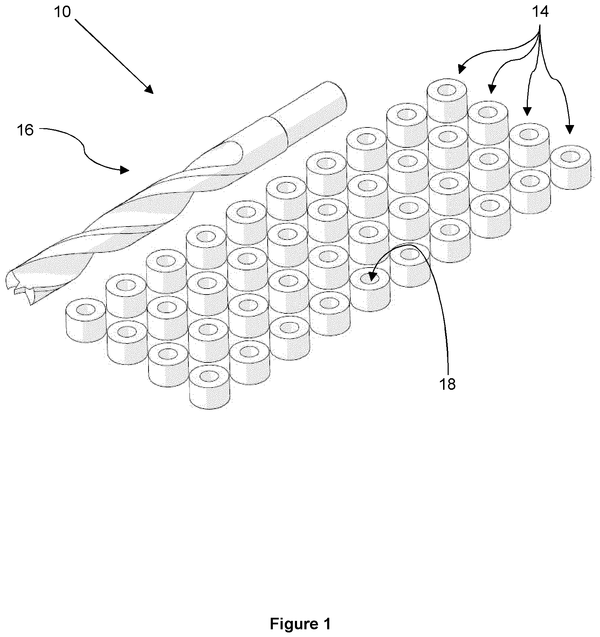

Referring to Figure 1, there is a shown a mounting kit, referenced globally at 10, for use in installing an object to compressible wallboard 12. The mounting kit 10 comprises a plurality of spacer inserts 14 and a suitable drill bit 16.

The drill bit 16 is preferably a brad point drill bit, since there is a risk of travel or wander of the drill bit 16 during the installation process due to the flexibility of compressible wallboard 12.

The spacer inserts 14 are formed having a tubular body, having an outer diameter equal to that of the drill bit 16, shown as 14mm, a bore 18 dimensioned to receive a fastener, typically a screw therethrough. The bore 18 here has a 5mm diameter, but any appropriate dimension for receiving a screw therethrough will be viable, provided that there remains sufficient structural material for the tubular body.

The thickness or height of the spacer insert 14 is equal to a thickness of the compressible wallboard 12 into which the spacer insert 14 is to be installed. In the depicted embodiment, both the thickness of the spacer insert 14 and the compressible wallboard 12 is 10mm. However, different thickness of compressible wallboard are known, and common thickness are 6mm, 8mm, and 12mm. The compressible wallboard 12 is here a hollow wallboard, but it is anticipated that foam-filled cores could be provided as an alternative.

It is preferred that the spacer insert 14 be formed from a suitable plastics material, such as nylon, having good abrasion and wear resistance. Nylon is also non-absorbent, which is important as the most common installation setting for the compressible wallboard 12 will be in a bathroom or wetroom.

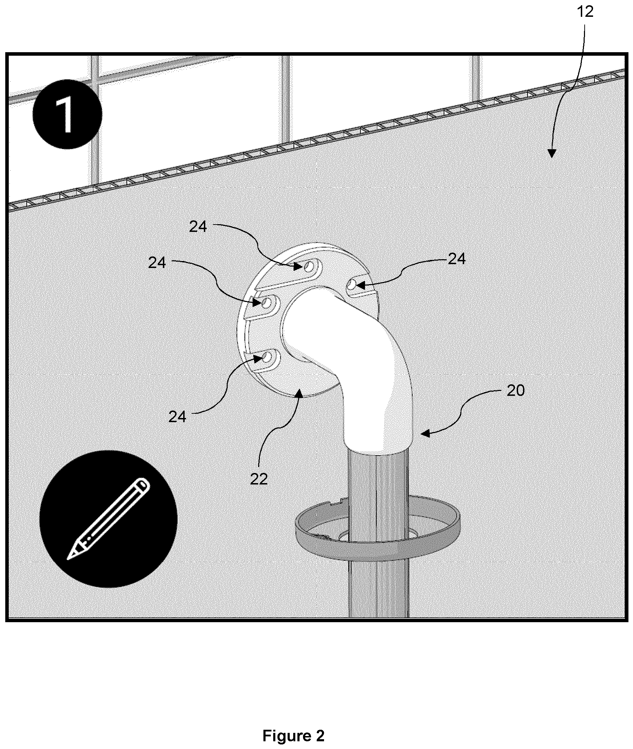

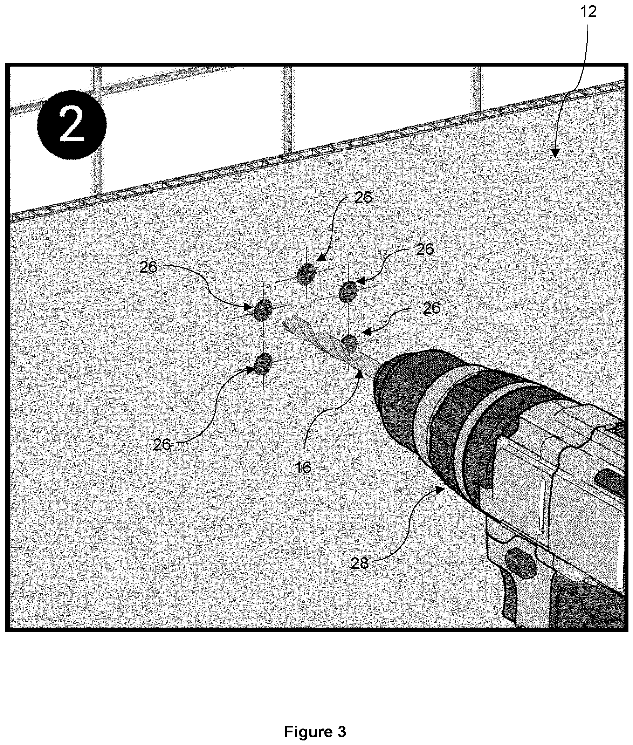

The method of use of the mounting kit 10 is shown in Figures 2 to 6. It is used to mount an object, such as the grab rail 20 indicated, to a compressible wallboard 12.

Here, the term compressible wallboard 12 is used to refer to any structural board which is fully or partly compressible, in particular, that having a construction in which there are void channels running through the compressible wallboard 12 in parallel to one another. In particular, this is applicable to compressible wallboards 12 formed from a plastics material, most preferably PVC. In particular, the compressible wallboards 12 are preferably formed from a waterproof building material.

The term PVC is used as the common vernacular within the industry, but the material used is usually unplasticized PVC, known as uPVC, and these terms are used interchangeably throughout.

Firstly, the compressible wallboard 12 is marked, at step 1, where the fixings for the grab rail 20 or similar object needs to be installed. It will be appreciated that, whilst a grab rail 20 is shown, this is for indicative purposes only, and any appropriate object to be mounted could be interchanged. This marking is achieved by positioning the flange 22 of the grab rail 20 in situ, and using a marking implement such as a pencil, marking the positions of fastener apertures 24 of the flange 22. Then, at step 2, the grab rail 20 is removed to reveal the markings 26 and to allow for the approach of a drill 28.

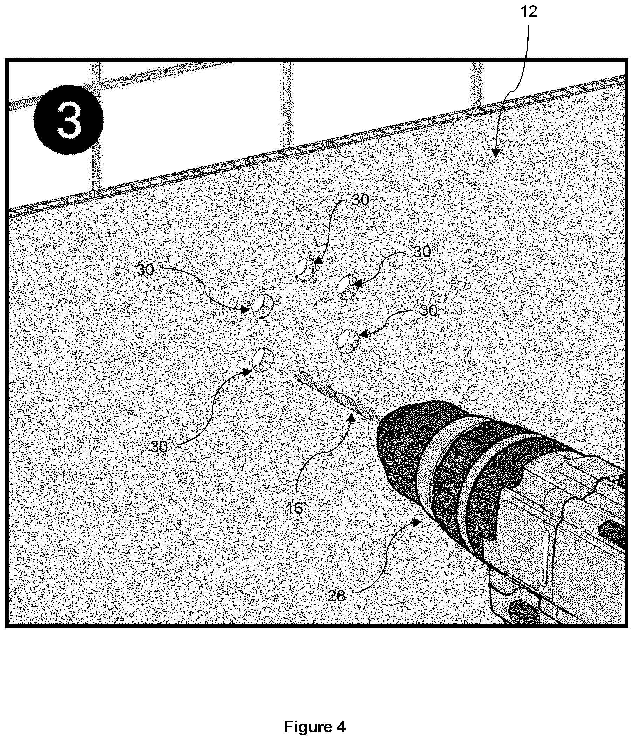

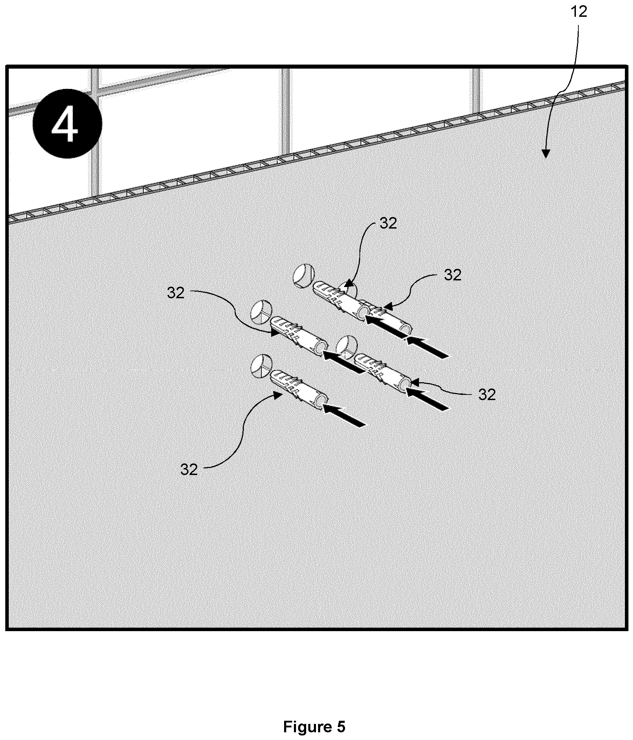

At step 3, shown in Figure 4 the drill 28 is used, using a drill bit 16, to drill clean holes 30 at the markings 26 through the thickness of the compressible wallboard 12, piercing both front and rear layers of the compressible wallboard 12. The same drill bit 16 may also penetrate the underlying substrate, to a thickness to permit insertion of one or more wall plugs 32. However, more likely, a different drill bit 16', as shown, may be used which is more appropriately dimensioned for the selected fixings, and/or more appropriate for drilling into the substrate. The wall plugs 32 are indicated being installed in Figure 5, at step 4.

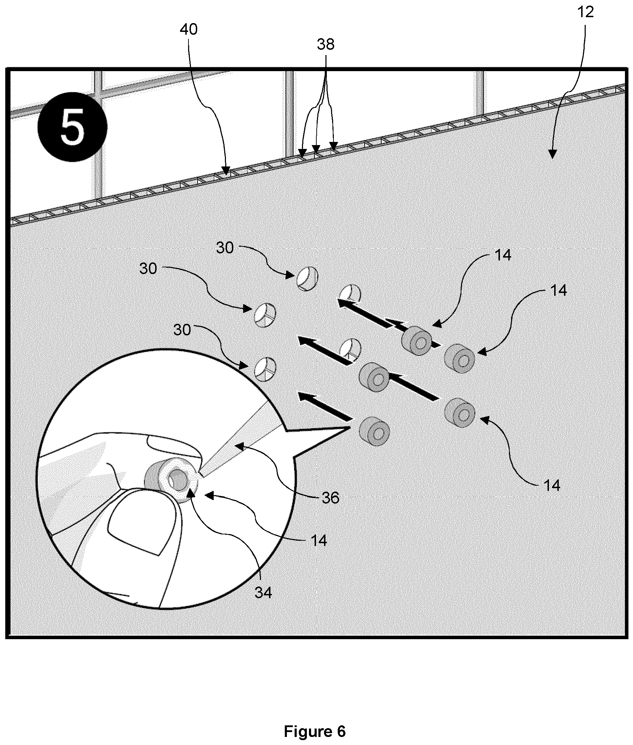

Once the wall plugs 32 are installed, the spacer inserts 14 can be inserted into the drilled holes 30, as shown in Figure 6 at step 5. Each of the spacer inserts 14 is dimensioned to precisely fit into the drilled hole 30, and is preferably held in place against the substrate and/or wall plug 32 using adhesive 34 applied to a substrate-facing side of the spacer inserts 14. An adhesive applicator 36 is illustrated in the inset image of Figure 6. The spacer inserts 14 should thus completely fill the drilled holes, preventing any water ingress paths from being formed into or through the compressible wallboard 12.

It is preferred that the diameter of the spacer inserts 14 be greater than that of the separation between the reinforcement members 38 of the compressible wallboard 12 so that the spacer inserts 14 cannot inadvertently fall down into the void channels 40 within the compressible wallboard 12.

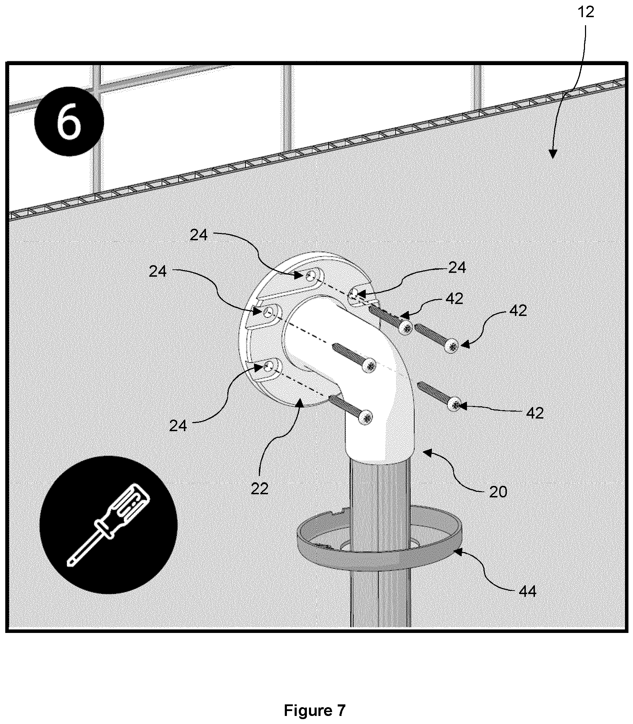

As shown in Figure 7, at step 6, the grab rail 20 can then be installed by using a plurality of screw-threaded fasteners 42 which extend through the internal bores 18 of the spacer inserts 14, and engage into the wall plugs 32, holding the flange 22 fast to the compressible wallboard 12. A cap 44 of the grab rail 20 can then be used to cover the fasteners 42 and obscure them from view.

It is therefore possible to provide a method and kit which allows a user to safely install objects onto compressible wallboard, particularly PVC wallboard, and most notably for use in a wetroom or showering environment, without risking water ingress through to the underlying substrate. This allows for furniture, including assisted living furniture such as grab rails and shower seats to be installed without compromising the waterproofing of the wallboard. The spacer inserts provide both structural support for the compressible wallboard, as well as a physical barrier to water ingress once installed correctly.

The words 'comprises/comprising' and the words 'having/including' when used herein with reference to the present invention are used to specify the presence of stated features, integers, steps, or components, but do not preclude the presence or addition of one or more other features, integers, steps, components, or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

The embodiments described above are provided by way of examples only, and various other modifications will be apparent to persons skilled in the field without departing from the scope of the invention as defined herein.

## Claims

1. A method for mounting an object to compressible wallboard (12), the method comprising the steps of:
a] providing at least one spacer insert (14) having a thickness equal or substantially equal to a thickness of the compressible wallboard (12);
b] making a number of holes (30) in the compressible wallboard (12) equal to a number of fasteners (42) required to mount the object to the compressible wallboard (12), the or each hole (30) being dimensioned to receive a said spacer insert (14) therein;
c] inserting a said spacer insert (14) into the or each hole such that a front surface of the or each spacer insert (14) is flush or substantially flush to a front surface of the compressible wallboard (12); and
d] mounting the object to the compressible wallboard (12) by engaging the or each fastener (42) at the or each spacer insert (14).

2. A method as claimed in claim 1, wherein the compressible wallboard (12) is formed from a plastics material.

3. A method as claimed in claim 1 or claim 2, wherein during step d] the or each fastener (42) is engaged with a substrate to which the compressible wallboard (12) is mounted.

4. A method as claimed in any one of claims 1 to 3, wherein during step b], a said number of holes (30) is made in a substrate to which the compressible wallboard (12) is mounted, and a corresponding number of wall plugs (32) is inserted into the holes (30) in the substrate, and during step d] the or each fastener (42) is engaged with the or each wall plug (32).

5. A method as claimed in any one of the preceding claims, wherein the spacer inserts (14) are adhesively secured to a substrate to which the compressible wallboard (12) is mounted

6. A method as claimed in any one of the preceding claims, wherein, during step d], the or each fastener (42) extends through a bore (18) in the or each spacer insert (14).

7. A method as claimed in any one of the preceding claims, wherein during step a], a diameter of the spacer inserts (14) is selected to be greater than a distance between adjacent reinforcement members (38) of the compressible wallboard (12).

8. A kit of parts (10) for use in a method as claimed in any one of the preceding claims, the kit (10) comprising a plurality of spacer inserts (14) having a thickness equal or substantially equal to a thickness of the compressible wallboard (12).

9. A kit of parts (10) as claimed in claim 8, wherein each of the plurality of spacer inserts (14) has a thickness in the range of 6mm to 12mm.

10. A kit of parts (10) as claimed in claim 8 or claim 9, wherein each of the plurality of spacer inserts (14) has a fastener receiving bore (18) therethrough.

11. A kit of parts (10) as claimed in claim 10, further comprising a plurality of fasteners (42) dimensioned to be received through the fastener receiving bore (18).

12. A kit of parts (10) as claimed in any one of claims 8 to 11, further comprising a drill bit (16).

13. A kit of parts (10) as claimed in any one of claims 8 to 12, wherein a diameter of each of the plurality of spacer inserts (14) is greater than a distance between adjacent reinforcement members of the compressible wallboard (12).

14. A kit of parts (10) as claimed in any one of claims 8 to 13, further comprising a plurality of wall plugs (32).

15. A kit of parts (10) as claimed in any one of claims 8 to 14, further comprising an adhesive (34).
